(19)

Europäisches
Patentamt
European
Patent Office
Office européen
des brevets

(11) **EP 3 441 441 A1**

(12) **EUROPEAN PATENT APPLICATION**

(43) Date of publication:
**13.02.2019 Bulletin 2019/07**

(51) Int Cl.:
***C10G 3/00*** (2006.01)

(21) Application number: **17185755.0**

(22) Date of filing: **10.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Total Research & Technology Feluy 7181 Seneffe (BE)**

(72) Inventors:
• **DIVERCHY, Chantal**
 **1470 BOUSVAL (BE)**
• **STEWART, Joseph**
 **1180 Uccle (BE)**

(74) Representative: **Mazurelle, Jean**
 **Total Research and Technology Feluy**
 **Zone Industrielle Feluy C**
 **7181 Seneffe (BE)**

(54) **USE OF NOBLE METAL CATALYST FOR DCO PROCESS IN PRESENCE OF SULFUR**

(57) The invention relates to the use of a catalyst composition in a deoxygenation and hydroisomerization process to convert a feedstock into at least a hydrocarbon fraction, the use being remarkable in that the catalyst composition comprises, as active metal component, one or more noble metals selected from the group comprising platinum and mixtures of platinum with one or more noble metals from the platinum group being different from platinum, and wherein, the one or more noble metal being disposed on an acidic catalyst support, and in that the deoxygenation and hydroisomerization process is carried out in presence of hydrogen and in presence of at least 50 ppm by weight of sulfur in the reaction medium as based on the total weight of the reaction medium.

EP 3 441 441 A1

**Description**

**Field of the invention**

The present invention relates to the use of catalysts in a process for converting lipids from renewable feedstock, such as vegetable oils, and/or mixed feedstock comprising renewable feedstock, into a hydrocarbon product that can be used for the production of fuels and other chemicals.

**Background of the invention**

In the field of sustainable development and feedstock diversification, alternative routes for the production of fuels and chemicals are currently being considered. Amongst biofeeds, vegetable oils are of interest because of their limited oxygen content compared to lignocellulosic derived compounds and the potential interest of their side chains.

It is known from prior art to convert renewable feedstock into hydrocarbon product by a catalytic deoxygenation process that can be done by means of hydrodeoxygenation (HDO) or of decarboxylation (DCO).

In the HDO process, the feedstock is subjected to a catalytic hydrogenation process for removing oxygen, resulting in the formation of water as by-product by consumption of hydrogen and to the formation of hydrocarbons of the carbon number (Cn) that is equal to that of the chain-length of the starting material. One of the disadvantages of HDO is that the process involves high hydrogen consumption, another one is the production of water. Typical HDO catalysts commonly are sulfided nickel or cobalt-molybdenum on gamma alumina.

In the DCO process, the feedstock is subjected to a catalytic decarboxylation leading to the formation of carbon oxides (carbon monoxide and carbon dioxide) and to the formation of hydrocarbons having one carbon less (Cn-1) relative to the chain-length of the starting material. Thus, the DCO process has the advantage of less hydrogen consumption compared to the HDO process but one carbon is lost.

The liquid effluent obtained from these processes essentially consists of n-paraffins that can be incorporated into kerosene fuels for example. In order to improve the properties under cold conditions of this liquid effluent, a hydroisomerization stage is required for transforming the n-parrafins into branched paraffins.

However, it has been found that the water generated in the HDO process has potential to poison isomerization catalysts, so that the process for producing branched paraffins from renewable feedstock may involve two separates steps. In a first step, the lipid is hydrogenated and deoxygenated to produce n-paraffins in presence of hydrogen. In a second and subsequent step, the n-paraffins are hydroisomerized to produce iso-paraffins. However such two-step processes imply multiple units in which hydrogenation, deoxygenation and hydroisomerization proceed over different catalysts, and therefore need a large investment for the manufacture of the system equipment.

Thus there is an interest to produce branched paraffins over a single catalyst in a single step. Therefore, the finding of catalysts able to perform both deoxygenation and hydroisomerization reactions in a process to convert a feedstock into at least one hydrocarbon fraction is of interest.

There is also an interest the finding of catalysts able to perform both deoxygenation and hydroisomerization reactions that further show high selectivity toward DCO reaction in order to lower the hydrogen consumption.

Another problem encountered is related to the content of sulfur in the reaction medium, which may find its origin in the feedstock itself (in case of co-processing of renewable and fossil feedstocks) or in the hydrogen feed (when the hydrogen feed is a recycled gas containing $H_2S$). Upon the choice of the catalyst, the presence of sulfur can favor the reaction (when the catalyst's active form is a sulfide one) or can lead to catalyst deactivation for catalysts that do not include a sulfided form.

When catalytic deoxygenation of lipids, such as fatty acids, is carried out using conventional catalysts, such as cobalt and molybdenum catalysts (i.e. CoMo catalysts) or nickel and molybdenum catalysts (i.e. NiMo catalysts), as the renewable feedstock is free of sulfur or contains low sulfur, addition of a sulfiding agent to the feed is required to keep the catalyst in active form (the sulfide one). The suitable content of sulfur can be added with the hydrogen stream that is provided to perform the reactions when such stream finds its origin in recycled gas. Depending on the conditions, decarboxylation can be favored over hydrodeoxygenation. Besides limiting catalyst deactivation, the presence of high amounts of sulfur compounds was reported to modify product selectivity toward the DCO process in Senol, T.-R. Viljava, A.O.I. Krause, *Catalysis Today* **106** (2005) 186. Whatever the pathway, some drawbacks linked to the use of these sulfide catalysts can be underlined. It is reported in C. Zhao et al., Green Chem. 15 (2013) 1697, that water produced by HDO will shorten the lifetime of the catalyst due to accelerated leaching. Additionally, separation of the oxygenated gases from recycle gas (when recycling of $H_2S$) is an issue. It would be thus attractive to use non-sulfided catalysts instead of conventional hydrotreating catalysts for the deoxygenation of fatty acids.

Noble metal based catalysts have been identified as active components for deoxygenation processes and in particular for the DCO process. These catalysts do not show a sulfide form and during the process of lipid conversion to paraffins, catalyst deactivation can occur due to the presence of sulfur in the hydrogen feed (when the hydrogen feed is a recycled gas containing $H_2S$) or in the feedstock.

Noble metal based catalysts (i.e. Palladium-based catalysts) were suggested in the literature for deoxygenation of fatty acids or oils. The use of alumina-based acid catalysts for deoxygenation of fatty acid was also reported in the literature. Under inert atmosphere, $Pd/Al_2O_3$ catalyst was not reported to be effective for the deoxygenation of fatty acids in M. Snare et al., Ind. Eng. Chem. Res. 45 (2006) 5708. 23.7 % conversion was achieved with a selectivity towards n-C17 reaching 20%. The other major product was a ketone obtained by self-condensation of the reactant (see also A.S. Berenblyum et al., Pet. Chem. 51 (2011) 336). Under hydrogen pressure (20 bar), $Pd/Al_2O_3$ was highly active and selective towards DCO products (see A.T. Madsen et al., Fuel 90 (2011)3433): 100 % conversion of fatty acid was achieved at 325°C and 20 bar after 5 h (in batch mode) over a load of 5 wt% of $Pd/Al_2O_3$. Addition of hydrogen allowed limiting side reactions forming self-condensate compounds (ketones and esters) as described in P.T. Do et al., Catal. Lett. 130 (2009) 9. Those species are reported to be formed over the bare oxide support. A number of palladium and platinum- based catalysts (i.e. Pd/Pt-based catalysts) supported on alumina or on alumina silicates have been shown in both patent and academic literature, for example in S. Gong et al., Energy Fuels 26 (2012) 2394.

US2011/0219671 discloses a method for dewaxing and/or isomerizing a diesel fuel comprising hydrotreating a feedstock including a biocomponent portion of at least 25 wt%. This document reads that when the catalyst used includes the sulfide form of a metal (for example when the catalyst includes nickel or tungsten), it can be beneficial for the feedstock to have at least a minimum sulfur content of at least 50 ppm by weight. Additional sulfur to maintain the metal of the catalyst in a sulfided state can be provided by a gas-phase $H_2S$. On the other hand, when the catalyst does not include a sulfide form the feed should be selected with relatively low content of sulfur such as of less than 10 ppm by weight.

WO2015/181749 discloses the hydrotreatment of a mixture of fatty acids with the direct formation of iso- and normal-paraffins wherein fatty acids obtained by hydrolysis of palm oil are subjected to hydrotreatment on a Platinum catalyst dispersed on amorphous silica-alumina in the presence of hydrogen. However, the document is silent regarding the behavior of said catalyst in presence of sulfur.

There is still a need for a process of catalytic deoxygenation procedure and a catalyst showing high selectivity toward the DCO reaction, low hydrogen consumption, possibility to obtain in a single step a hydrocarbon fraction rich in branched paraffin and resistance to sulfur deactivation.

Thus it is an object of the invention to provide a catalyst for the catalytic deoxygenation and and hydroisomerization process showing high selectivity toward the DCO reaction and resistance to sulfur deactivation.

**Summary of the invention**

According to a first aspect, the invention provides a new use of a catalyst for the DCO process in the presence of sulfur in the reaction medium. It is also an object of the invention to provide the use of a catalyst composition in a deoxygenation and hydroisomerization process to convert a feedstock into at least a hydrocarbon fraction, the use being remarkable in that the catalyst composition comprises, as active metal component, one or more noble metals selected from the group comprising platinum and mixtures of platinum with one or more noble metals from the platinum group being different from platinum, wherein the one or more noble metal are disposed on an acidic catalyst support, and further wherein the deoxygenation and hydroisomerization process is carried out in presence of hydrogen and in presence of at least 50 ppm by weight of sulfur in the reaction medium as based on the total weight of the reaction medium.

Surprisingly, it has been found by the inventors that catalysts containing noble metals selected from platinum or mixtures of platinum with one or more noble metals from the platinum group being different from platinum supported by acidic catalyst support showed at the same time a high selectivity toward DCO reaction and resistance to sulfur deactivation. Thus it is possible to perform a catalytic deoxygenation process in presence of a hydrogen feed stream comprising sulfur, for example at least 50 ppm of sulfur, or even at least 200 ppm of sulfur, as based of the total weight of the hydrogen feed stream, such as recycled hydrogen feed stream. In accordance with the invention, there is no need to purify such a hydrogen feed stream contaminated with sulfur before using it, resulting in a global lowering of the costs related to this process. The use of the invention can also be interesting for co-processing of feedstock mixtures of both renewable and mineral oil origin. The use of the invention can further be interesting for processing feedstock from renewable origin that has been contaminated with sulfur.

One of the advantages of the invention is that the selected catalysts can be used in the presence of sulfur as in the inventive use, but also in the absence of sulfur. So it is no longer necessary to adapt the content of sulfur in the feedstock in a deoxygenation and hydroisomerization process. This is different from NiMo and CoMo catalysts, which were shown to deactivate rapidly in the absence of sulfur.

With preference, one or more of the following features can be used to further define the inventive use:

- The deoxygenation and hydroisomerization process converts lipids from a renewable feedstock into at least a hydrocarbon fraction.

- The deoxygenation and hydroisomerization process is carried out in presence of at least 60 ppm by weight of sulfur in the reaction medium as based on the total weight of the reaction medium, preferably of at least 100 ppm by weight, more preferably of at least 150 ppm by weight.
- The content of sulfur in the reaction medium is originated from an hydrogen feed stream comprising at least 50 ppm by weight of sulfur based on the total weight of the hydrogen feed stream and/or from a feedstock comprising at least 50 ppm by weight of sulfur based on the total weight of the feedstock.
- The deoxygenation and hydroisomerization process is conducted in presence of an hydrogen feed stream and the hydrogen feed stream comprises at least 50 ppm by weight of sulfur, preferably at least 60 ppm by weight of sulfur, more preferably at least 100 ppm by weight of sulfur, even more preferably of at least 150 ppm by weight, most preferably of at least 500 ppm by weight and even most preferably of at least 1000 ppm by weight or of at least 2500 ppm by weight as based on the total weight of the hydrogen feed stream.
- The feedstock comprises at least 60 ppm by weight of sulfur, preferably at least 100 ppm by weight of sulfur, more preferably at least 200 ppm by weight of sulfur, even more preferably of at least 500 ppm by weight, most preferably of at least 1000 ppm by weight and even most preferably of at least 2000 ppm by weight or of at least 2500 ppm by weight as based on the total weight of the feedstock.
- The catalyst composition comprises, as active metal component, one or more noble metals selected from the group comprising platinum and mixture of platinum and palladium.
- The catalyst composition comprises two or more noble metals selected from the platinum group as active metal component, preferably one of the two or more noble metals selected from the platinum group is platinum.
- The catalyst composition comprises, as active metal component, a mixture of platinum with one or more noble metals from the platinum group being different from platinum, and the content of platinum in the mixture is preferably at least 50 wt% relative to the total weight of the mixture.
- The catalyst composition comprises, as active metal component, a mixture of platinum and palladium in a ratio ranging from 10:1 to 1:1, preferably ranging from 5:1 to 1:1, more preferably ranging from 2:1 to 1:1 and even more preferably in a 1:1 ratio.
- The catalyst composition comprises, as active metal component, from 0.01 to 10 wt% of the at least one metal relative to the total weight of the catalyst.
- The acidic catalyst support is selected from the group comprising: silica, alumina, silica-alumina, and mixtures thereof, preferably the acidic support is silica-alumina.
- The acidic catalyst support is alumina, and preferably gamma-alumina.
- The catalyst composition is selected from $Pt/Al_2O_3$, $Pd\text{-}Pt/Al_2O_3$, $Pt/SiO_2\text{-}Al_2O_3$, $Pd\text{-}Pt/SiO_2\text{-}Al_2O_3$ and mixtures thereof.
- The catalyst composition is devoid of zeolites.
- The deoxygenation and hydroisomerization process is conducted in presence of a hydrogen feedstream, and preferably the volumetric ratio between hydrogen to the feedstock feed is ranging from 500 to 1000 Nl $H_2$ /l of feedstock feed.
- The deoxygenation and hydroisomerization process is carried out at a temperature ranging from 100 °C to 550 °C, preferably from 250 °C to 450 °C, more preferably from 280 °C to 400 °C, even more preferably from 300 °C to 380 °C.
- The deoxygenation and hydroisomerization process is carried out under a pressure ranging from 0.1 MPa to 10 MPa, preferably from 1 to 9 MPa, more preferably from 2 to 6 MPa.
- The feedstock comprises from 25 wt% to 100 wt% of renewable feedstock, preferably the feedstock comprises 100 wt% of renewable feedstock.
- The renewable feedstock is selected from fats and/or oils and derivatives thereof originating from vegetable, animal, fish and/or algae and mixtures thereof.
- The renewable feedstock comprises mixture of fatty acids which is prepared by hydrolysis of triglycerides originated from a renewable source.
- The renewable feedstock comprises triglycerides originated from a renewable source.
- The renewable feedstock comprises at least 50 wt%, preferably at least 70 wt% and more preferably at least 80 wt% of fatty acids and/or triglycerides originated from a renewable resource.
- The deoxygenation and hydroisomerization of the feedstock are performed in one single step.
- The catalyst composition carry out both deoxygenation and hydroisomerization of the feedstock.
- The deoxygenation and hydroisomerization process is performed on a fixed bed reactor.

**Detailed description of the invention**

As used herein the generic term "catalyst" refers to a "supported catalyst" comprising a metal as main active phase and a support.

For the purpose of the invention the expression "renewable feedstock" includes feedstock different from "mineral oil feedstock", in other words different from feedstock deriving from petroleum. "Mineral oil feedstock" in accordance with the invention is a hydrocarbon-based oil from a fossil/mineral fuel source such as crude oil, virgin distillate, etc.

The "renewable feedstock" in accordance with the invention refers to hydrocarbon feedstock derived from a biological raw material such as fats and/or oils from vegetable, animal, fish and/or algae and mixtures thereof. The renewable feedstock may further comprise derivatives of fats and/or oils from vegetable, animal, fish and/or algae and mixtures thereof.

Examples of vegetable oil that can be used as renewable feedstock includes but are not limited to sunflower oil, rapeseed oil, canola oil, palm oil, soybean oil, hempseed oil, olive oil, linseed oil, peanut oil, mustar oil, coconut oil, castor oil, etc.

Examples of animal fats that can be used as renewable feedstock includes but are not limited to beef fats, pork fats, poultry fats, fish fats/oils, etc.

Examples of algal sources for algae oil that can be used as renewable feedstock includes but are not limited to unicellular and multicellular algae such as chlorophyte and haptophyte.

The renewable feedstock that can be used in accordance with the invention comprises lipids, preferably the renewable feedstock comprises one or more components selected from the group comprising fatty acids, fatty acid esters, fatty alcohols, fatty olefins, monoglycerides, diglycerides, triglycerides, phospholipids and saccharolipids. Preferably, the renewable feedstock that can be used in accordance with the invention comprises primarily glycerides, in form of mono- , di- or triglycerides, and/or fatty acids.

The fatty acids may contain from 10 to 30 carbon atoms and can be saturated, or mono-unsaturated or poly unsaturated. The fatty acids can be free fatty acids (FFA) or fatty acids obtained by hydrolysis of triglycerides. The fatty acid constituents of the renewable feedstock can be determined using gas chromatography analysis (GC).

In a preferred embodiment, the feedstock used in accordance with the invention can include up to 100 wt% of renewable feedstock, and preferably 100 wt% of renewable feedstock as based on the total weight of the feedstock. In another embodiment, the feedstock used in accordance with the invention is a mixture of renewable feedstock together with mineral oil feedstock. In such a case the content of renewable feedstock is of at least 25 wt% based on the total weight of the feedstock, preferably at least 50 wt%, and more preferably at least 80 wt%.

The mineral oil feedstock generally has a content of sulfur that is higher than the content of sulfur of the renewable feedstock. Thus, the content of sulfur of a feedstock created by blending two or more feedstock such as for example a renewable feedstock and a mineral oil feed stock can be determined using a weighted average based on the blended feeds or by XRF analysis.

In an embodiment, the content of sulfur of the feedstock is at least 50 ppm by weight as based on the total weight of the feedstock, preferably at least 60 ppm by weight, more preferably at least 100 ppm by weight, even more preferably at least 150 ppm or at least 200 ppm by weight, most preferably at least 500 ppm by weight, even most preferably of at least 1000 ppm by weight and preferably of at least 2000 ppm by weight or of at least 2500 ppm by weight.

In a preferred embodiment, the renewable feedstock comprises hydrolysed biofeed such as a hydrolysed vegetable oil feed. A hydrolysed biofeed is a feed wherein crude fats and oils are optionally refined, either physically or chemically, to remove all non-glyceride and non-fatty acid components to form a refined oils. The refined oil or the crude fats and oils are then subjected to a hydrolysis step for obtaining free fatty acids and glycerol.

In an embodiment, the free fatty acids are fractionated in both liquid and solid fraction. The liquid fraction comprises free fatty acids having double bonds in the acyl-moieties, whereas the solid fraction comprises free fatty acids having saturated or substantially saturated acyl-moieties. "Substantially saturated acyl-moieties" refers to a composition comprising at least 90 wt% of saturated fatty acids as based on the total weight of the composition. The solid fraction comprising saturated fatty acids is used as renewable feedstock for the catalytic deoxygenation in accordance to the use of the invention. The liquid fraction can be further processed by esterification with a C1-C5 monofunctional alcohol in order to produce alkyl fatty esters as bio-diesel. Said alcohol can be methanol.

In another embodiment, no fractionation step is performed and all the fatty acids are used as renewable feedstock for the catalytic deoxygenation in accordance to use of the invention.

In another embodiment, the renewable feedstock comprises a non-hydrolysed biofeed and the deoxygenation and hydroisomerization process according to the invention further comprises a preliminary hydrolysis step prior to the catalytic deoxygenation step.

The invention relates to the use of a catalyst composition in a deoxygenation and hydroisomerization process to convert a feedstock into at least a hydrocarbon fraction, the use being remarkable in that the catalyst composition comprises, as active metal component, one or more noble metals selected from the group comprising platinum and mixtures of platinum with one or more noble metals from the platinum group being different from platinum, wherein the one or more noble metal are disposed on an acidic catalyst support, and in that the deoxygenation and hydroisomerization process is carried out in presence of hydrogen and in presence of at least 50 ppm by weight of sulfur in the reaction medium as based on the total weight of the reaction medium.

In an embodiment, the deoxygenation and hydroisomerization process is carried out in presence of at least 60 ppm by weight of sulfur in the reaction medium as based on the total weight of the reaction medium, preferably of at least 100 ppm by weight, more preferably of at least 200 ppm by weight and even more preferably of at least 500 ppm by weight.

Surprisingly, it has been found that specific non-sulfided catalyst compositions, as the ones used in accordance with the invention to perform the catalytic deoxygenation and hydroisomerization, can be sulfur resistant, which means that they won't deactivate in presence of sulfur. So that the catalytic compositions used in accordance with the invention are not subjected to sulfur deactivation with a content of sulfur of at least 50 ppm by weight of sulfur in the reaction medium as based on the total weight of the reaction medium or even with a content of sulfur of at least 500 ppm or of at least 1000 ppm.

The content of sulfur in the reaction medium may come from a hydrogen feed stream comprising at least 50 ppm by weight of sulfur based on the total weight of the hydrogen feed stream and/or from a feedstock comprising at least 50 ppm by weight of sulfur based on the total weight of the feedstock.

In a preferred embodiment of the invention, the content of sulfur in the reaction medium comes from a hydrogen feed stream comprising at least 50 ppm by weight of sulfur based on the total weight of the hydrogen feed stream.

Thus in a preferred embodiment, the deoxygenation and hydroisomerization process is conducted in presence of an hydrogen feed stream and the hydrogen feed stream comprises at least 50 ppm by weight of sulfur, preferably at least 60 ppm by weight of sulfur, more preferably at least 100 ppm by weight of sulfur, even more preferably at least 150 ppm by weight, most preferably at least 200 ppm by weight and even most preferably of at least 500 ppm by weight or of at least 1000 ppm by weight or of at least 2500 ppm by weight as based on the total weight of the hydrogen feed. In the feed stream the sulfur is mainly in the form of $H_2S$.

The catalyst composition used in accordance with the invention comprises one or more metal as active component, the one or more metal being selected from the group comprising platinum and mixtures of platinum with one or more noble metals from the platinum group being different from platinum, wherein the platinum group consists of platinum (Pt), ruthenium (Ru), rhodium (Ph), palladium (Pd), osmium (Os) and Iridium (Ir).

According to the invention, the catalyst comprises platinum or a mixture of platinum with another noble metal selected from the platinum group wherein the content of platinum is preferably at least 50 wt% of the mixture. Noble metal active components have been found to provide a high selectivity towards DCO vs. HDO, thus minimizing the hydrogen consumption. Platinum has been found to provide a resistance to sulfur, and platinum-palladium based catalysts exhibit high selectivity towards decarboxylation.

In an embodiment, the catalyst composition used in accordance with the invention comprises platinum or a mixture of platinum with another noble metal selected from the platinum group, wherein the content of platinum is preferably at least 50 wt% of the mixture, as active component, in a content of at least 0.1 wt% based on the total weight of the catalyst composition, preferably of at least 0.3 wt%, more preferably of at least 0.5 wt%, even more preferably of at least 1.0 wt%, most preferably of at least 1.5 wt%.

Additionally or alternatively, the catalyst composition used in accordance to the invention comprises platinum or a mixture of platinum with another noble metal selected from the platinum group, wherein the content of platinum is preferably at least 50 wt% of the mixture, as active component in a content of at most 10.0 wt% based on the total weight of the catalyst composition, preferably of at most 7.0 wt%, more preferably of at most 5.0 wt%, even more preferably of at most 3.0 wt%, most preferably of at most 2.5 wt%, even most preferably of at most 2.0 wt%, such as for example of at most 1.5 wt%.

In a preferred embodiment, the catalyst composition used in accordance with the invention comprises a mixture of platinum and palladium in a ratio ranging from 10:1 to 1:1, preferably ranging from 5:1 to 1:1, more preferably ranging from 2:1 to 1:1 and even more preferably in a 1:1 ratio.

The catalyst composition used in accordance with the invention comprises an acidic catalyst support supporting the active metal component. Preferably the acidic catalyst support is selected from silica, alumina, silica-alumina, and mixtures thereof. More preferably the acidic support is selected from alumina and silica-alumina. Even more preferably the acidic support is silica-alumina. In an embodiment, the acidic support is alumina and is preferably gamma-alumina. In an embodiment, the acidic catalyst support is an amorphous acidic catalyst support. The use of an acidic catalyst support allows hydroisomerization reaction to occurs, and thus the possibility to obtain branched paraffins that enhance the cold properties of the product obtained.

Thus in accordance with the invention, the catalyst composition carry out both deoxygenation and hydroisomerization of the feedstock, so that the deoxygenation and hydroisomerization of the feedstock are performed in one single step.

In a preferred embodiment, the invention provide the use of a catalyst composition selected from $Pt/Al_2O_3$, Pd-$Pt/Al_2O_3$, $Pt/SiO_2$-$Al_2O_3$, Pd-$Pt/SiO_2$-$Al_2O_3$ and mixtures thereof.

Noble metal catalysts are available from a variety of commercial producers including AKZO-NOBEL®, ALBEMARLE®, AXENS, GENTAS, HALDOR TOPSOE AS, Johnson Matthey, W.R. GRACE & Co., which produce many hydrotreating catalysts like the HALDOR TOPSOE TK-335, TK-339, TK-341, and TK-351, Johnson Matthey PRICAT PD and PT/Alumina, KETJENFINE®(KF) 200-A, ALBEMARLE® KF-200 and KF-201, AXENS LD catalyst family, Grace-Davison ALCYON™, and similar catalysts.

The catalytic deoxygenation in accordance with the use of the invention can be done by means of hydrodeoxygenation (HDO) and/or decarboxylation (DCO). The catalyst composition to be used in accordance with the invention provides high DCO selectivity, thus minimizing the hydrogen consumption of the process. Moreover, the catalyst composition to be used in accordance with the invention is capable of catalyzing both deoxygenation and hydroisomerization reactions. Thus the use in accordance of the invention provides deoxygenation and hydroisomerization of the renewable feedstock in a single step using a single catalyst composition.

When catalytic deoxygenation and hydroisomerization are accomplished simultaneously, the catalytic processes may be done in a single reactor or in a single zone of a reactor. In accordance with the invention, catalytic deoxygenation and isomerization are done in presence of solid catalyst in batch type tank reactors, continuous fixed bed type reactors, continuous stirred tank reactors or slurry type reactors.

In a preferred embodiment, the deoxygenation (i.e. decarboxylation) and hydroisomerization reactions are performed at the same time in the presence of a hydrogen feed stream under conditions of elevated temperature and pressure.

The reaction can be carried out in a batch reactor or in a fixed-bed reactor. Preferably, the reaction is carried out in a fixed-bed reactor.

In a preferred embodiment, the reaction is carried out in presence of a hydrogen feed stream and the volumetric ratio between hydrogen to the feedstock feed is ranging from 500 to 1000 Nl $H_2$ /l of feedstock feed.

In a preferred embodiment, the LHSV of the input stream is from about 0.1 $hr^{-1}$ to 10 $hr^{-1}$ for example from 0.5 $hr^{-1}$ to 1.5 $hr^{-1}$.

With preference the reaction temperature is ranging from 110 to 550 °C, preferably from 250 to 450°C, more preferably from 280 to 400 °C, even more preferably from 300 to 380 °C.

With preference the process is carried out at a pressure ranging from 0.1 to 10 MPa, preferably from 1 to 9 MPa, more preferably from 2 to 6 MPa.

The liquid effluent leaving the reactor mainly comprises a mixture of linear and branched paraffins with a total number of carbon atoms typically ranging from 8 to 26. The mixture of paraffins can be used as diesel or jet fuel for example after a step of distillation. The performance under low temperature condition is conditioned to the presence of branched paraffins.

**Test methods**

The wt% content of the sulfur in the hydrogen stream (or the reaction medium) is determined by an online gas chromatograph (Agilent 7890A) equipped with a flame photometric detector (FPD) and a thermal conductivity detector (TCD).

The wt% content of sulfur in the feedstock is determined by Wavelength Dispersive X-ray Fluorescence (WDXRF) analysis using a PANalytical Axios instrument with a RX tube with a rhodium anode and a Philips PW2400 equipped with an RX tube with a chromium anode. K$\alpha$ radiation was used and helium was used as a carrier gas.

The gas chromatography (GC) analysis of the hydrocarbon phase is performed by introducing in a capillary non-polar column a sample previously diluted in dichloromethane. The capillary non-polar column used is a HP-5 non-polar column having a length of 30 meters, an intern diameter of 0.25 mm and a phase thickness of 0.25 $\mu$m.

The fatty acid conversion (%) is determined semi-quantitatively by simdist and quantitatively either by TAN (Total Acid Number) measurement, using titration or FTIR methods or by GC-MS analysis.

Simulated Distillation (Simdist) process is performed using an Agilent 6980 equipped with a PTV injector, an apolar capillary column and an flame ionised detector (FID). The conditions are those recommended by ASTM D2887. TAN (Total Acid Number) measurement was performed using an ATR Pike GladiATR with a diamond crystal. Samples were analysed with 4 $cm^{-1}$ resolution, 32 scans at 60 °C. A calibration curve was made by using potentiometry. Samples were pretreated at 60 °C prior to analysis.

**Examples**

The following examples illustrate the invention.

Example 1: Possibility to perform deoxygenation and isomerisation in a single step

DCO reactions were conducted using KF-200 catalyst (commercially available at ALBEMARLE®). KF-200 is a Pd-Pt/SiO$_2$-Al$_2$O$_3$ catalyst. KF-200 catalyst is firstly activated according to the protocol below. The ratio Pt: Pd in the catalyst is 1:1.

Catalyst activation

A KF-200 catalyst solution is dried under a feed stream of nitrogen of 50 Nl/h. The drying is conducted at atmospheric pressure and temperature is increased to 150°C from 30 °C/h and maintained at 150 °C for 3 hours. The temperature is then reduced to 50 °C.

The dried solution of KF-200 catalyst is then activated under a feed stream of hydrogen of 50 Nl/h. The activation is conducted at a pressure of 1.5 MPa and temperature is increased to 300 °C from 30 °C/h, maintained at 300 °C for 1 hour, and then increased to 400 °C from 30 °C/h and maintained at 400 °C for 10 hours.

Test Conditions

DCO reactions with KF-200 catalyst were conducted in fixed-bed reactors. The reactions were conducted at a temperature of 360 °C, a pressure of 6 MPa for 4 hours, and a liquid hour space velocity (LHSV) of 0.5 h$^{-1}$. The feedstock was a fatty acid mix, which is a predominantly oleic acid (C18 with one unsaturation) supplied by Mosselman, with a feed stream of 50 Nl/h. Deoxygenation reactions were conducted in the same reactor with a NiMo/Al$_2$O$_3$ catalyst as comparative example. The reactions were conducted in the same conditions except the temperature was 300°C.

Results

The hydrocarbon phase recovered was analyzed using GC analysis and the results of the experiment as regards to composition of hydrocarbons is reported in table 1. In the table, reference to the branched products is indicated by the wording "sum". Thus, for example, "Sum n-C6 and n-C7" refers to the sum of all branched products between the signals for n-C6 and n-C7.

Table 1: GC analysis of the hydrocarbon phase.

|  | E1 | CE1 |
|---|---|---|
| Catalyst | Pd-Pt/SiO$_2$-Al$_2$O$_3$ | NiMo Catalyst |
| Hydrocarbon phase composition | (%w:w) | (%w:w) |
| Sum of all < to n-C6 | 0.008 | nd |
| n-C6 | 0.016 | nd |
| Sum n-C6 and n-C7 | 0.046 | nd |
| n-C7 | 0.05 | 0.003 |
| n-C1-cyclohexane (methylcyclohexane) | 0.011 | nd |
| Sum n-C7 and n-C8 | 0.114 | 0.005 |
| n-C8 | 0.136 | 0.026 |
| n-C2-cyclohexane (ethyl-cyclohexane) | 0.013 | nd |
| Sum n-C8 and n-C9 | 0.279 | 0.016 |
| n-C9 | 0.713 | 0.167 |
| n-C3-cyclohexane | 0.01 | nd |
| Sum n-C9 and n-C10 | 0.477 | 0.023 |
| n-C10 | 0.776 | 0.13 |
| Sum n-C10 and n-C11 | 0.63 | 0.023 |
| n-C11 | 0.649 | 1.12 |
| Sum n-C11 and n-C12 | 0.723 | 0.028 |
| n-C12 | 0.538 | 0.693 |
| Sum n-C12 and n-C13 | 0.841 | 0.02 |
| n-C13 | 0.473 | 0.13 |

(continued)

|  | E1 | CE1 |
|---|---|---|
| Sum n-C13 and n-C14 | 0.879 | 0.015 |
| n-C14 | 0.368 | 0.073 |
| Sum n-C14 and n-C15 | 1.772 | 0.03 |
| n-C15 | 2.376 | 2.305 |
| Sum n-C15 and n-C16 | 5.876 | 0.104 |
| n-C16 | 2.192 | 1.309 |
| Sum n-C16 and n-C17 | **19.049** | 3.422 |
| n-C17 | 24.077 | 55.14 |
| Sum n-C17 and n-C18 | **10.262** | 2.47 |
| n-C18 | 14.275 | 28.54 |
| n-C13-cyclopentane | 0.192 | nd |
| n-C12-cyclohexane | 0.208 | nd |
| Sum n-C18 and n-C19 | 0.792 | 1.252 |
| n-C19 | 0.288 | 0.717 |
| Sum n-C19 and n-C20 | 0.297 | 0.056 |
| n-C20 | 0.185 | 0.222 |
| Sum n-C20 and n-C21 | 0.162 | 0.015 |
| n-C21 | 0.105 | 0.021 |
| Sum n-C21 and n-C22 | 0.233 | 0.01 |
| n-C22 | 0.098 | 0.014 |
| Sum n-C22 and n-C23 | 0.508 | 0.014 |
| n-C23 | 0.297 | 0.052 |
| Sum n-C23 and n-C24 | 0.897 | 0.013 |
| n-C24 | 0.322 | 0.047 |
| Sum n-C24 and n-C25 | 1.245 | 0.028 |
| n-C25 | 0.768 | 0.106 |
| Sum n-C25 and n-C26 | 1.052 | 0.054 |
| n-C26 | 1.631 | 0.422 |
| Sum n-C26 and n-C27 | 0.224 | 0.033 |
| n-C27 | 0.231 | 0.011 |
| Sum n-C27 and n-C28 | 0.129 | 0.023 |
| n-C28 | 0.122 | 0.02 |
| Sum n-C28 and n-C29 | 0.07 | 0.011 |
| n-C29 | 0.072 | 0.008 |
| Sum n-C29 and n-C30 | 0.04 | 1.059 |
| n-C30 | 0.024 | nd |
| Sum n-C30 and n-C31 | 0.053 | nd |
| n-C31 | 0.03 | nd |

(continued)

|  | E1 | CE1 |
|---|---|---|
| Sum n-C31 and n-C32 | 0.103 | nd |
| n-C32 | 0.036 | nd |
| Sum n-C32 and n-C33 | 0.207 | nd |
| n-C33 | 0.091 | nd |
| Sum n-C33 and n-C34 | 0.449 | nd |
| n-C34 | 0.154 | nd |
| Sum n-C34 and n-C35 | 0.323 | nd |
| n-C35 | 0.311 | nd |
| Sum of the non-identified > n-C35 | 0.423 | nd |
| total | 100.000 | 100.000 |
| nd: not detected | | |

It can be clearly seen that the catalyst according to the invention provides branched paraffins compared to the comparative NiMo catalyst. The isomerization of the paraffin allows a decrease of the cold flow catalyst from 20°C for the NiMo catalyst to 7.5°C for the selected catalyst according to the invention.

The use of the catalyst according to the invention provides an interest as it may perform deoxygenation and isomerization in a single step to obtain drop-in gasoil with improved cold flow properties compared to non-isomerized product.

DCO selectivity was determined according to the formula:

$$\text{DCO (\%)} = \frac{\Sigma(nC15 + nC17)}{\Sigma(nC15 + nC16 + nC17 + nC18)} \times 100$$

In the example above, the Pd-Pt/SiO$_2$-Al$_2$O$_3$ system expresses a DCO selectivity of 61.6 %, calculated using the stated equation. The DCO selectivity for the NiMo/Al$_2$O$_3$ system was 65.8%. This appears higher due to the fact that the isomerised products are not taken into account for this calculation. Deoxygenated isomerised products were significantly higher (4-6 times) for the Pd-Pt/SiO$_2$-Al$_2$O$_3$ system compared to the NiMo/Al$_2$O$_3$ system.

Example 2: resistance to sulfur

DCO reactions with Pd-Pt/SiO$_2$-Al$_2$O$_3$ catalyst were conducted in batch reactors. The reactions were conducted at a temperature of 350 °C and at a pressure of 1.5 MPa for 4 hours. In each case, the amount of catalyst added was 0.2 g. The content of sulfur in the feed was adapted to comprise from 0 to 21 000 ppm by weight of sulfur in the form of dimethyl disulfide based on the total weight of the feed. No solvent was used for these reactions. The feedstock was a fatty acid mix, which is predominantly oleic acid (C18 with one unsaturation). The results of the experiment with regards to the conversion of fatty acids is reported in table 2. Target conversion was intermediate in order to better study the effect of sulfur

Table 2: Fatty acid conversion in presence of sulfur in the reaction medium under batch conditions

|  | Sulfur (ppm) | Fatty acid conversion (%) |
|---|---|---|
| E4 | 0 | 28 |
| E5 | 50 | 33 |
| E6 | 200 | 30 |
| E7 | 21000 | 31 |

From the results it can be seen that conversion of fatty acid does not decrease with the addition of sulfur in the reaction medium demonstrating a resistance to sulfur. The changes in conversion observed are within experimental error.

Example 3: resistance to sulfur

DCO reactions with Pd-Pt/SiO$_2$-Al$_2$O$_3$ and Pd/SiO$_2$-Al$_2$O$_3$ catalysts were conducted in continuous flow fixed-bed reactors. The reactions were conducted at a temperature of 350 °C and at a pressure of 6 MPa. In each case, the amount of active metal(s) and LHSV were kept constant. The content of sulfur in the feed was 200 ppm by weight of sulfur in the form of dimethyl disulfide based on the total weight of the feed. No solvent was used for these reactions. The feedstock was a fatty acid mix, which is predominantly oleic acid (C18 with one unsaturation). The results of the experiment with regards to the conversion of fatty acids is reported in table 3

Table 3: Fatty acid conversion in the presence of sulfur in the reaction medium under flow conditions

|  | Catalyst | Fatty acid conversion (%) at t = 4h | Fatty acid conversion (%) at t = 26h |
|---|---|---|---|
| E8 | Pd-Pt/SiO$_2$-Al$_2$O$_3$ | 98.0 | 97.8 |
| E9 | Pd-Pt/SiO$_2$-Al$_2$O$_3$ (200 ppm sulfur) | 98.7 | 96.7 |
| CE2 | Pd/SiO$_2$-Al$_2$O$_3$ | 90.4 | 82.7 |
| CE3 | Pd/SiO$_2$-Al$_2$O$_3$ (200 ppm sulfur) | 84.5 | 72.2 |

The results demonstrate the resistance of sulfur of the Pt-based catalysts compared to the Pd-based catalysts.

Example 4 Content of sulfur on industrial units

The content of sulfur was determined on an industrial unit, and was found to be 180 ppm by weight of sulfur as based on the total weight of the hydrogen feed stream.

**Claims**

1. Use of a catalyst composition in a deoxygenation and hydroisomerization process to convert a feedstock into at least a hydrocarbon fraction, the use being **characterized in that** the catalyst composition comprises, as active metal component, one or more noble metals selected from the group comprising platinum and mixtures of platinum with one or more noble metals from the platinum group being different from platinum, and wherein, the one or more noble metal are disposed on an acidic catalyst support, and **in that** the deoxygenation and hydroisomerization process is carried out in presence of hydrogen and in presence of at least 50 ppm by weight of sulfur in the reaction medium as based on the total weight of the reaction medium.

2. The use according to claim 1 **characterized in that** the content of sulfur in the reaction medium is originated from an hydrogen feed stream comprising at least 50 ppm by weight of sulfur based on the total weight of the hydrogen feed stream and/or from a feedstock comprising at least 50 ppm by weight of sulfur based on the total weight of the feedstock

3. The use according to claim 1 or 2 **characterized in that** the one or more noble metal is selected from the group comprising platinum and mixture of platinum and palladium.

4. The use according to any one of claims 1 to 3 **characterized in that** the catalyst composition comprises, as active metal component, a mixture of platinum with one or more noble metals from the platinum group being different from platinum, and **in that** the content of platinum in the mixture is preferably at least 50 wt% relative to the total weight of the mixture.

5. The use according to any one of claims 1 to 4 **characterized in that** the acidic catalyst support is selected from the group comprising: silica, alumina, silica-alumina, and mixtures thereof, preferably the acidic support is silica-alumina.

6. The use according to any one of claims 1 to 5 **characterized in that** the catalyst composition is selected from Pt/Al$_2$O$_3$, Pd-Pt/Al$_2$O$_3$, Pt/SiO$_2$-Al$_2$O$_3$, Pd-Pt/SiO$_2$-Al$_2$O$_3$ and mixtures thereof.

7. The use according to any one of claims 1 to 6 **characterized in that** the volumetric ratio between hydrogen to the feedstock feed is ranging from 500 to 1000 NI H$_2$ / of feedstock feed.

8. The use according to claim 7 **characterized in that** the deoxygenation and hydroisomerization process is conducted in presence of an hydrogen feed stream and the hydrogen feed stream comprises at least 50 ppm by weight of sulfur, preferably at least 60 ppm by weight of sulfur, more preferably at least 100 ppm by weight of sulfur as based on the total weight of the hydrogen feed stream.

9. The use according to any one of claims 1 to 8 **characterized in that** the deoxygenation and hydroisomerization process is carried out in presence of at least 60 ppm by weight of sulfur in the reaction medium as based on the total weight of the reaction medium, preferably of at least 100 ppm by weight, more preferably of at least 150 ppm by weight.

10. The use according to any one of claims 1 to 9 **characterized in that** the deoxygenation and hydroisomerization process is carried out at a temperature ranging from 100 to 550°C and under a pressure ranging from 0.1 MPa to 10 MPa.

11. The use according to any one of claim 1 to 10 **characterized in that** the feedstock comprises from 25 wt% to 100 wt% of renewable feedstock, preferably the feedstock comprises 100 wt% of renewable feedstock.

12. The use according to any one of claims 1 to 11 **characterized in that** the renewable feedstock is selected from fats and/or oils and derivatives thereof originating from vegetable, animal, fish and/or algae and mixtures thereof.

13. The use according to any one of claims 1 to 12 **characterized in that** the renewable feedstock comprises at least 50 wt%, preferably at least 70 wt% and more preferably at least 80 wt% of fatty acids and/or triglycerides originated from a renewable resource.

14. The use according to any one of claims 1 to 13 **characterized in that** the deoxygenation and hydroisomerization of the feedstock are performed in one single step.

15. The use according to any one of claims 1 to 14 **characterized in that** the deoxygenation and hydroisomerization process is performed in a fixed-bed reactor.

Europäisches
Patentamt

European
Patent Office

Office européen
des brevets

# EUROPEAN SEARCH REPORT

Application Number

EP 17 18 5755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2011/219671 A1 (HANKS PATRICK L [US] ET AL) 15 September 2011 (2011-09-15) * claims; examples * | 1-15 | INV. C10G3/00 |
| A | US 2016/060538 A1 (VERICKER CLINT [US] ET AL) 3 March 2016 (2016-03-03) * paragraph [0020] - paragraph [0025]; claims * | 1-15 | |
| A | AHMAD GALADIMA ET AL: "Catalytic upgrading of vegetable oils into jet fuels range hydrocarbons using heterogeneous catalysts: A review", JOURNAL OF INDUSTRIAL AND ENGINEERING CHEMISTRY, vol. 29, 1 September 2015 (2015-09-01), pages 12-23, XP055438342, KOREA ISSN: 1226-086X, DOI: 10.1016/j.jiec.2015.03.030 * the whole document * | 1-15 | |
| A | WO 2013/184545 A1 (EXXONMOBIL RES & ENG CO [US]) 12 December 2013 (2013-12-12) * example 1 * | 1-15 | TECHNICAL FIELDS SEARCHED (IPC) C10G |
| A,D | WO 2015/181749 A1 (ENI SPA [IT]) 3 December 2015 (2015-12-03) * claims * | 1-15 | |

The present search report has been drawn up for all claims

| Place of search | Date of completion of the search | Examiner |
|---|---|---|
| The Hague | 10 January 2018 | Van der Poel, Wim |

## ANNEX TO THE EUROPEAN SEARCH REPORT
## ON EUROPEAN PATENT APPLICATION NO.

EP 17 18 5755

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2018

| Patent document cited in search report | | Publication date | Patent family member(s) | | Publication date |
|---|---|---|---|---|---|
| US 2011219671 | A1 | 15-09-2011 | AU | 2011224482 A1 | 27-09-2012 |
| | | | CA | 2791690 A1 | 15-09-2011 |
| | | | CN | 102791834 A | 21-11-2012 |
| | | | EP | 2545143 A2 | 16-01-2013 |
| | | | JP | 5789272 B2 | 07-10-2015 |
| | | | JP | 2013522395 A | 13-06-2013 |
| | | | SG | 183860 A1 | 30-10-2012 |
| | | | US | 2011219671 A1 | 15-09-2011 |
| | | | WO | 2011112660 A2 | 15-09-2011 |
| US 2016060538 | A1 | 03-03-2016 | NONE | | |
| WO 2013184545 | A1 | 12-12-2013 | AU | 2013271891 A1 | 15-01-2015 |
| | | | CA | 2872826 A1 | 12-12-2013 |
| | | | CN | 104508090 A | 08-04-2015 |
| | | | EP | 2855635 A1 | 08-04-2015 |
| | | | JP | 6173446 B2 | 02-08-2017 |
| | | | JP | 2015525271 A | 03-09-2015 |
| | | | SG | 11201406795T A | 27-11-2014 |
| | | | US | 2013338414 A1 | 19-12-2013 |
| | | | WO | 2013184545 A1 | 12-12-2013 |
| WO 2015181749 | A1 | 03-12-2015 | EP | 3149134 A1 | 05-04-2017 |
| | | | WO | 2015181749 A1 | 03-12-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110219671 A

- WO 2015181749 A

**Non-patent literature cited in the description**

- **C. ZHAO et al.** *Green Chem.,* 2013, vol. 15, 1697
- **M. SNARE et al.** *Ind. Eng. Chem. Res.,* 2006, vol. 45, 5708
- **A.S. BERENBLYUM et al.** *Pet. Chem.,* 2011, vol. 51, 336

- **A.T. MADSEN et al.** *Fuel,* 2011, vol. 90, 3433
- **P.T. DO et al.** *Catal. Lett.,* 2009, vol. 130, 9
- **S. GONG et al.** *Energy Fuels,* 2012, vol. 26, 2394